# DEMANDE DE BREVET EUROPEEN

(11) **EP 2 732 695 A1**
(43) Date de publication de la demande: **21.05.2014**
(21) Numéro de dépôt: 13193235.2
(22) Date de dépôt: 18.11.2013
(51) Int. Cl.: A01F 29/00, A01K 5/00

(54) **Machine agricole pour démêler des balles de paille ou de foin**

(30) Priorité: 19.11.2012 FR 1260962
(71) Demandeur: SARL des Aragonites, 40360 Bastennes (FR)
(72) Inventeur: Lavigne, Thierry, 40360 Bastennes (FR)
(74) Mandataire: Fragnaud, Aude

(57) **Abrégé**

L'invention se rapporte à une machine agricole (100) pour démêler des balles de paille ou de foin. La machine comprend une benne (110) pourvue d'une trappe de sortie (114). La benne est en outre équipée d'un dispositif démêleur qui comprend deux vis sans fin (130, 140), disposées côte à côte, sur toute la longueur de la benne, et dont les axes (138, 148) sont pourvus de picots (133, 143). Ainsi, lorsque les vis sans fin (130, 140) sont entrainées en rotation, les picots (133, 143) permettent d'ouvrir les balles de paille, et de faire tomber la paille (201) arrachée entre les deux vis, lesquelles transportent ensuite la paille vers la trappe de sortie (114).

## Description

La présente invention concerne une machine agricole pour démêler des balles de paille ou de foin.

Plus particulièrement, l'invention se rapporte à une machine agricole pour démêler des balles de paille ou de foin, comprenant une benne munie, dans son fond, d'une sortie, la benne étant équipée d'un dispositif démêleur.

Une telle machine, apte à démêler la paille ou le foin, est encore dénommée pailleuse. Elle permet notamment d'alimenter un broyeur pour fabriquer un produit broyé destiné à servir à la production de litières pour animaux, d'engrais naturels ou encore de matériaux d'isolation utilisés dans le domaine de la construction par exemple.

On connait des machines pour démêler les balles de paille ou de foin. Une telle machine est par exemple décrite dans le document FR2751508. Elle comprend une benne munie d'un fond généralement incliné et d'un tapis roulant vers une extrémité où se trouve un démêleur. L'extrémité opposée au démêleur comprend un poussoir destiné à maintenir la balle contre le démêleur. Le démêleur est en général constitué par un cylindre muni de picots qui attaque la face de la balle présentée contre le démêleur. Le produit ainsi démêlé est ensuite conduit vers un orifice de sortie au moyen d'un ventilateur.

On connait également, du document AT413 314, une machine à démêler la paille ou le foin qui comprend une benne pourvue, à une extrémité, d'un orifice de sortie de la paille démêlée. La benne comprend une vis sans fin, disposée sur toute sa longueur, et permettant de convoyer la paille démêlée vers l'orifice de sortie. De part et d'autre de cette vis sans fin, sont disposés deux cylindres dentés, sur toute la longueur de la benne, et dont les dents permettent d'arracher et de démêler la paille. La vis sans fin et les deux cylindres dentés sont entrainés en rotation par un moteur d'entrainement.

Cependant, ces machines ne permettent pas de démêler la paille ou le foin avec des débits suffisants. Des bourrages fréquents, notamment, nécessitent d'éteindre régulièrement la machine, de remuer la balle de paille ainsi que la paille démêlée tombée au fond de la benne pour débloquer la vis et les cylindres, puis de redémarrer la machine. Ces arrêts répétés impliquent une réduction supplémentaire du débit.

L'invention a donc pour but de remédier à au moins un des inconvénients de l'art antérieur. En particulier, l'invention vise à accroître le rendement de la machine de démêlage des balles de paille ou de foin, et à éviter les problèmes de bourrage.

A cet effet, l'invention a pour objet une machine agricole pour le démêlage de balles de paille ou de foin, comprenant une benne pourvue d'une sortie (114) pour la paille ou le foin et équipée d'un dispositif démêleur, ladite machine étant principalement **caractérisée en ce que** le dispositif démêleur comprend deux vis sans fin (130, 140), disposées côte à côte, sur toute la longueur de la benne, et dont les axes (138, 148) sont pourvus de picots (133, 143), les vis sans fin étant ainsi aptes à accrocher les balles pour en arracher la paille ou le foin et la convoyer vers la sortie lorsqu'elles sont mises en fonction.

Avantageusement, la mise en fonction des vis est réalisée par un entrainement mécanique. Cet entrainement mécanique est réalisé par un moteur et une chaîne de transmission reliée au moteur. Le moteur d'entraînement est de préférence un moteur électrique.

Ainsi, les deux vis sans fin permettent non seulement d'arracher la paille de la balle grâce à leurs picots, mais elles permettent aussi de convoyer la paille vers la sortie. L'utilisation de deux vis permet avantageusement de réduire les risques de bourrage.

Selon d'autres caractéristiques optionnelles de la machine :
- la sortie est une trappe (114) disposée au milieu du fond de la benne, et chaque vis (130, 140) présente deux portions (131A, 131B ; 141A, 141B), encadrant la trappe de sortie (114), dont les spires (135, 136 ; 145, 146) sont enroulées en sens inverse,
- les deux vis sans fin en regard présentent des enroulements de spires inversés l'une par rapport à l'autre,
- la machine comprend en outre deux pignons fixés respectivement sur l'axe de chaque vis sans fin, une chaine de transmission reliée à un moteur d'entrainement et permettant d'entrainer en rotation et en sens inverse les pignons et les deux vis sans fin,
- les pignons présentent deux diamètres différents afin que les deux vis soient entrainées en rotation à des vitesses différentes,
- le moteur d'entrainement est un moteur à double sens de rotation,
- les deux vis sans fin supportent respectivement, entre les deux portions, un moyen de rabattage, ledit moyen de rabattage étant apte à soulever la paille démêlée et à la rabattre dans ladite trappe de sortie,
- la machine comprend en outre un dispositif de convoyage disposé en regard de la trappe de sortie, le dispositif de convoyage comprenant une vis sans fin entrainée en rotation au moyen d'un deuxième moteur d'entrainement, de manière à transporter la paille ou le foin démêlé vers une sortie du convoyeur sur laquelle peut être raccordé un dispositif de broyage.

L'invention porte en outre sur un procédé de démêlage de balles de paille ou de foin au moyen de la machine agricole telle que décrite ci-dessus, **caractérisé en ce que** :
- au démarrage de la machine, les deux vis sans fins sont entrainées en rotation de manière telle qu'elles permettent d'arracher la paille des balles, puis de transporter la paille ainsi arrachée vers la trappe de sortie pour l'évacuer, puis
- le sens de rotation des vis sans fin est périodiquement inversé pendant une durée déterminée afin d'aérer la paille tombée au fond de la benne.

D'autres particularités et avantages de l'invention apparaitront à la lecture de la description suivante faite à titre d'exemple illustratif et non limitatif, en référence aux Figures annexées qui représentent :
- La Figure 1, un schéma simplifié d'une coupe longitudinale d'une machine agricole pour démêler les balles de paille ou de foin selon l'invention,
- La Figure 2, un schéma d'une vue de dessus en perspective de la machine de la Figure 1,
- La Figure 3, un schéma d'une vue d'une paroi d'extrémité de la machine de la Figure 1.

On définit par « balles de paille ou de foin » des volumes de paille ou de foin compactés en forme parallélépipédique ou cylindrique. Les balles sont encore dénommées indifféremment ballots, bottes ou rouleaux dans le vocabulaire agricole.

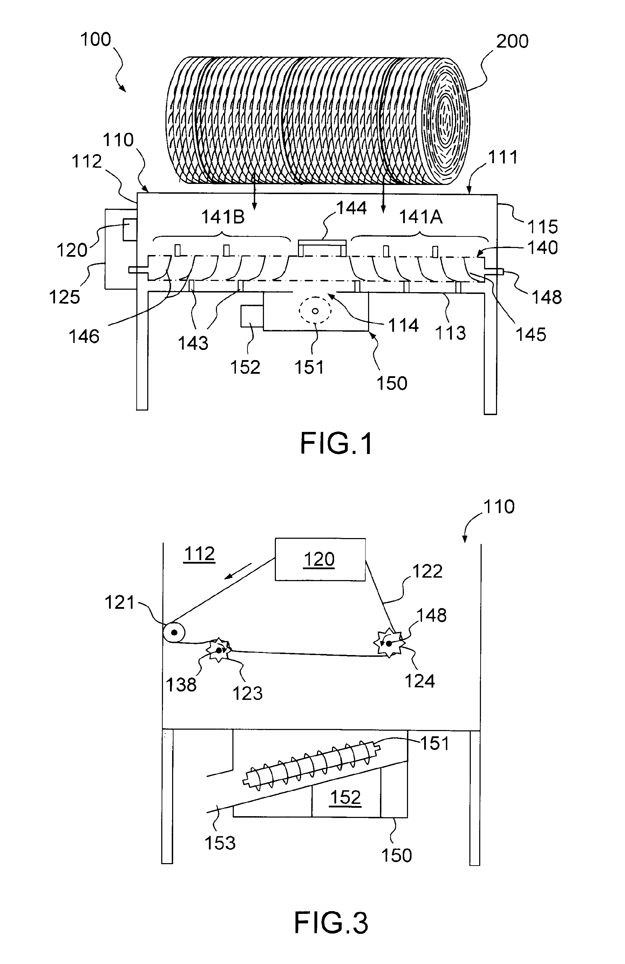

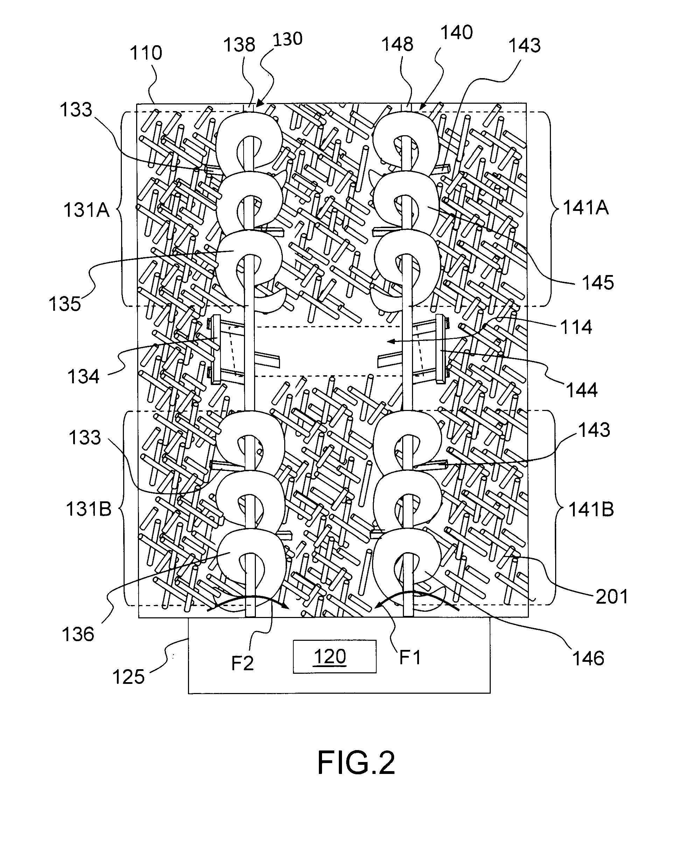

La machine 100 telle qu'illustrée sur les Figures 1 et 2, comprend une benne 110, de forme rectangulaire, dont les dimensions sont adaptées pour recevoir des balles 200 de paille ou de foin. Ainsi, la benne peut présenter une longueur de l'ordre de 3m, une hauteur de l'ordre de 1,50m et une profondeur de l'ordre de 1m. Sur les schémas, les parois de la benne 110 sont représentées verticales. Cependant, dans une variante de réalisation elles peuvent aussi être légèrement inclinées.

Le fond est plat et ne nécessite pas de décrochement pour y loger la vis, comme dans le cas du document AT413 314, pour permettre à la paille démêlée de tomber et d'être entrainée par la vis vers une extrémité de la benne.

Les balles de paille 200 sont introduites par l'ouverture 111 située sur le dessus de la benne. Le fond 113 de la benne, opposé à l'ouverture 111, est pourvu d'une trappe 114 de sortie de la paille ou du foin démêlé. Plus particulièrement, la trappe 114 est pratiquée au milieu du fond 113 de la benne 110. Le fait d'avoir une trappe d'évacuation de la paille située en milieu de benne, et non plus à une extrémité comme dans le document AT413 314, permet de convoyer la paille sur une plus petite distance. Cela facilite donc l'évacuation de la paille et améliore le débit.

La machine 100 comprend en outre deux vis sans fin 130, 140. Ces vis sont disposées côte à côte, sur toute la longueur de la benne, et sont fixées sur chaque paroi d'extrémité 112, 115 de la benne 110. Ces vis sont destinées à être entrainées en rotation par un moteur d'entrainement 120 disposé à l'extérieur de la benne, sur l'une des parois 112 d'extrémité. Les vis sans fin 130, 140 présentent donc une longueur égale à celle de la benne, c'est-à-dire une longueur de 3 m.

Chacune des vis 130, 140 comprend avantageusement des picots référencés respectivement 133, 143 destinés à arracher la paille ou de foin des balles. Ces picots sont solidaires des vis et fixés sur leur axe 138, 148, entre leurs spires 135, 136, 145, 146. A titre d'exemple, et pour avoir un ordre de grandeur des vis, les spires présentent un diamètre d'environ 25 cm, tandis que les picots présentent une longueur d'une trentaine de cm, afin qu'ils dépassent suffisamment des spires pour pouvoir accrocher correctement les balles et arracher la paille.

De préférence, chaque vis 130, 140 comprend deux portions référencées respectivement 131A, 131B et 141A 141B, de dimensions égales, de manière telle que les portions de chaque vis soient disposées de part et d'autre de la trappe de sortie 114 de la paille. Sur chaque vis 130, 140, les spires de chaque portion sont enroulées en sens inverse. Ainsi, sur la vis référencée 130, les spires 135 de la première portion 131A sont enroulées en sens inverse par rapport aux spires 136 de la deuxième portion 131B. De même, sur la vis référencée 140, les spires 145 de la première portion 141A sont enroulées en sens inverse par rapport aux spires 146 de la deuxième portion 141B. Le fait d'avoir deux enroulements inversés de spires sur une même vis permet ainsi de pouvoir ramener la paille 201 vers le milieu de la benne, c'est-à-dire vers la trappe de sortie 114 ou, au contraire, d'écarter la paille de la trappe de sortie pour la ramener vers les extrémités de la benne, selon le sens de rotation de la vis.

La paille 201 ainsi démêlé est donc entrainée par les vis sans fin 130, 140 vers la trappe de sortie 114 et tombe, sous la poussée d'un moyen de rabattage 134, 144 et la gravité, au-dessus d'un convoyeur 150 destiné à guider la paille vers un broyeur non représenté sur les Figures mais disposé en dessous et à proximité de la machine.

De préférence, les vis 130, 140, disposées côte à côte, présentent également des enroulements de spires inversés l'une par rapport à l'autre. Les deux vis sont alors entrainées en rotation en sens inverse. De cette manière, lorsque les vis sont entrainées en rotation selon le sens des flèches F1, F2 représentées sur la Figure 2, les picots 133, 143 permettent d'ouvrir les balles de paille 200, et faire tomber la paille 201 arrachée entre les deux vis, lesquelles transportent ensuite la paille arrachée vers le milieu de la benne pour la faire tomber dans la trappe de sortie 114. Lorsque les vis sont entrainées en rotation dans le sens contraire, elles permettent d'aérer et de redisperser la paille 201 tombée dans le fond de la benne vers les parois extérieures.

La Figure 3 illustre, de manière très schématique, la paroi extérieure 112 de la benne sur laquelle est fixé le moteur d'entrainement 120 des vis. Deux pignons 123, 124 sont fixés respectivement sur l'axe 138, 148 de chaque vis sans fin 130, 140 afin de l'entrainer en rotation. Une chaine de transmission 122, entrainée par le moteur 120, permet d'entrainer les pignons 123, 124 en mouvement. Une roue libre 121, de type poulie par exemple, permet de régler la longueur de la chaine de transmission 122. La chaine de transmission 122 est disposée sur les pignons 123, 124 de telle sorte qu'elle permet de leur transmettre un mouvement de rotation en sens inverse, de manière à ce que les vis sans fin 130, 140 tournent en sens inverse l'une par rapport à l'autre.

De manière avantageuse, un des pignons 123 présente un diamètre légèrement inférieur à l'autre. De cette manière, il est possible de conférer une vitesse de rotation supérieure à la vis 130 qui lui est directement rattachée, par rapport à l'autre vis. Le fait d'avoir une vis qui tourne plus rapidement que l'autre permet notamment d'entrainer la paille plus vite d'un côté de la benne que de l'autre et ainsi de contribuer à l'obtention d'un meilleur démêlage de la paille avec un rendement amélioré.

Bien sûr ce système d'entrainement peut être remplacé par tout autre moyen équivalent tel qu'un système avec courroie de transmission par exemple.

Le moteur est avantageusement un moteur à double sens de rotation. Ainsi, il est possible d'inverser périodiquement le sens de rotation des vis, pendant une durée déterminée, afin de permettre d'aérer la paille arrachée et tombée au fond de la benne, de la redisperser, d'aider au démêlage et ainsi, d'éviter les bourrages qui pourraient avoir lieu lorsque la quantité de paille arrachée devient trop importante. A titre d'exemple, on pourra inverser le sens de rotation toutes les 20 secondes pendant une durée comprise entre 2 et 5 secondes. Le moteur est par exemple un moteur électrique avec automate de commande tel que commercialisé sous la marque déposée Mitsoubishi. De préférence, la puissance du moteur est de 4,8 KW.

Le moteur 120, la roue libre 121, les pignons 123, 124 et la chaine de transmission 122 sont de préférence protégés par un capot 125 de protection.

La machine comprend en outre un moyen de rabattage 134, 144 solidaire de chacune des deux vis. Un tel moyen est disposé entre les deux portions hélicoïdales 131A, 131B et 141A, 141B de chaque vis 130, 140, c'est-à-dire qu'il est situé au-dessus de la trappe de sortie 114. Ce moyen de rabattage joue le rôle d'une pelle. Il peut par exemple être constitué d'une petite planche fixée sur deux picots contigus, tel que cela est illustré sur la Figure 2, ou par tout autre moyen équivalent. Ainsi, lorsque les vis tournent selon le sens des flèches F1, F2 telles que représentées sur la Figure 2, le moyen de rabattage 134, 144 soulève la paille 201 en passant par-dessous à la manière d'une pelle, et la rabat dans la trappe de sortie 114. Il aide ainsi à l'évacuation de la paille vers le convoyeur 150.

Le fonctionnement de la machine 100 est le suivant :

Au démarrage, les deux vis sans fin 130, 140 sont entrainées en rotation de telle sorte que d'une part, les picots 133, 143 ouvrent les balles de paille en arrachant la paille et d'autre part, les spires des vis sans fin 130, 140 poussent la paille ainsi arrachée vers la trappe de sortie 114. Pour cela, les vis tournent dans le sens indiqué par les flèches F1, F2 représentées sur la Figure 2. Les picots 133, 143 s'enfoncent dans la balle de paille et arrachent de la paille qui retombe entre les deux vis. Les deux vis sans fin, en tournant, transportent la paille arrachée vers le milieu de la benne et la trappe de sortie 114. Le moyen de rabattage 134, 144 permet en outre de soulever la paille située à l'extérieur de la trappe, c'est-à-dire vers les parois de la benne, à la manière d'une pelle, pour la rabattre dans la trappe de sortie 114, et la faire tomber dans le convoyeur 150.

Puis, lorsque suffisamment de paille a été arrachée de la balle, le sens de rotation des vis est périodiquement inversé pendant une durée déterminée afin d'aérer la paille tombée au fond de la benne 110, de redisperser la paille vers les parois de la benne, et d'éviter ainsi les phénomènes de bourrage qui pourraient se produire.

La paille ainsi démêlée tombe par gravité et sous la poussée du moyen de rabattage dans la trappe 114 de sortie. Elle est alors récupérée et transportée, grâce à un convoyeur 150 fixé juste en dessous de la trappe 114, vers une sortie 153.

Le convoyeur 150 comprend lui aussi une vis sans fin 151 d'une longueur de l'ordre de 50 cm, et dont les spires présentent un diamètre de l'ordre de 35 cm. Cette vis sans fin 151, représentée en traits pointillés sur la Figure 3, présente des spires toutes orientées dans le même sens sur toute sa longueur. Cette vis sans fin 151 permet ainsi, lorsqu'elle est entrainée en rotation par un deuxième moteur d'entrainement 152, d'amener la paille vers une sortie 153 du convoyeur, à laquelle peut être raccordé un broyeur par exemple.

La machine qui vient d'être décrite permet de démêler des balles de paille ou de foin avec un rendement amélioré par rapport aux machines existantes. En effet, la machine permet d'améliorer l'évacuation de la paille et d'éviter les phénomènes de bourrage. Le fait d'avoir une trappe d'évacuation de la paille située en milieu de benne, et non plus à une extrémité comme dans le document AT413 314, permet de convoyer la paille sur une plus petite distance. Cela facilite donc l'évacuation de la paille et améliore le débit. Le fait d'avoir deux vis tournant à des vitesses différentes permet de faciliter le démêlage de la paille. Le moyen de rabattage contribue à pousser la paille vers la sortie et permet ainsi d'éviter que de la paille stagne à proximité de la trappe et n'engendre un phénomène de bourrage. Enfin, le fait d'avoir un moteur à double sens de rotation permet également d'éviter les phénomènes de bourrage.

## Revendications

1. Machine agricole (100) pour démêler des balles (200) de paille ou de foin comprenant une benne (110) pourvue d'une sortie (114) pour la paille ou le foin et équipée d'un dispositif démêleur, ladite machine étant **caractérisée en ce que** le dispositif démêleur comprend deux vis sans fin (130, 140), disposées côte à côte, sur toute la longueur de la benne, et dont les axes (138, 148) sont pourvus de picots (133, 143) aptes à ouvrir les balles (200) et à arracher la paille ou le foin.

2. Machine agricole selon la revendication 1, **caractérisée en ce que** la sortie est une trappe (114) disposée au milieu du fond de la benne, et **en ce que** chaque vis (130, 140) présente deux portions (131A, 131B ; 141A, 141B), encadrant la trappe de sortie (114), dont les spires (135, 136 ; 145, 146) sont enroulées en sens inverse.

3. Machine agricole selon l'une des revendications 1 à 2, **caractérisée en ce que** les deux vis sans fin (130, 140) en regard présentent des enroulements de spires inversés l'une par rapport à l'autre.

4. Machine agricole selon l'une des revendications 1 à 3, **caractérisée en ce qu'**elle comprend en outre deux pignons (123, 124) fixés respectivement sur l'axe (138, 148) de chaque vis sans fin (130, 140), une chaine de transmission (122) reliée à un moteur d'entrainement (120) et permettant d'entrainer en rotation et en sens inverse les pignons (123, 124) et les deux vis sans fin (130, 140).

5. Machine agricole selon la revendication 4, **caractérisée en ce que** les pignons (123, 124) présentent deux diamètres différents afin que les deux vis sans fin (130, 140) soient entrainées en rotation à des vitesses différentes.

6. Machine agricole selon l'une des revendications 4 à 5, **caractérisée en ce que** le moteur d'entrainement (120) est un moteur à double sens de rotation.

7. Machine agricole selon la revendication 2, **caractérisée en ce que** les deux vis sans fin (130, 140) supportent respectivement, entre leurs deux portions (131A, 131B ; 141A, 141B), un moyen de rabattage (134, 144), ledit moyen de rabattage étant apte à soulever la paille démêlée et à la rabattre dans ladite trappe de sortie (114).

8. Machine agricole selon l'une quelconque des revendications précédentes, **caractérisée en ce qu'**elle comprend en outre un dispositif de convoyage (150) disposé en regard de la trappe de sortie (114), le dispositif de convoyage (150) comprenant une vis sans fin (151) entrainée en rotation au moyen d'un deuxième moteur d'entrainement (152), de manière à transporter la paille ou le foin démêlé vers une sortie (153) du convoyeur sur laquelle peut être raccordé un dispositif de broyage.

9. Procédé de démêlage de balles de paille ou de foin au moyen de la machine (100) agricole selon l'une des revendications 1 à 8, **caractérisé en ce que**
- au démarrage de la machine, les deux vis sans fins (130, 140) sont entrainées en rotation de manière telle qu'elles permettent d'arracher la paille des balles, puis de transporter la paille ainsi arrachée vers la trappe de sortie (114) pour l'évacuer, puis
- le sens de rotation des vis sans fin est périodiquement inversé pendant une durée déterminée afin d'aérer la paille tombée au fond de la benne.
